# EUROPEAN PATENT APPLICATION

(11) **EP 0 866 331 A2**
(43) Date of publication of application: **23.09.1998**
(21) Application number: 98102804.6
(22) Date of filing: 18.02.1998
(51) Int. Cl.: G01N 21/59

(54) **Apparatus and methods for assessing optical material resistance to deterioration**

(30) Priority: 19.02.1997 JP 34705/97
(71) Applicant: NIKON CORPORATION, Tokyo 100 (JP)
(72) Inventor: Oshikawa, Satoru, Chiyoda-ku, Tokyo 100 (JP)
(74) Representative: Meddle, Alan Leonard

(57) **Abstract**

Apparatus and methods are disclosed for measuring resistance of an optical member to deterioration caused by exposure of the optical member to short-wavelength light (e.g., intense ultraviolet light such as produced by an excimer laser). An exemplary embodiment comprises a light source that emits a pulsatile laser beam, a first lens system for shaping the beam, and a second lens system for adjusting beam intensity. Downstream of the second lens system is a beamsplitter that produces a measurement beam directed to the optical member and a reference beam directed to a light sensor. A photo-acoustic sensor is placed adjacent the optical member to detect photo-acoustic signals generated in the optical member in response to pulses of the measurement beam irradiated on the optical member. The photo-acoustic signals can be analyzed to obtain a statistic pertaining to the optical condition of the optical member.

## Description

### Field of the Invention

The present invention relates to apparatus and methods for assessing the resistance of optical members to deterioration due to repeated exposure to short-wavelength light, such as repeated exposure to high-intensity ultraviolet laser light.

### Background of the Invention

In recent years, advances in semiconductor integrated circuit technology have been remarkable with the trends toward ever-decreasing microstructures of semiconductor elements and higher integration of the circuitry. To date, so-called optical wafer steppers ("steppers") that use visible light have been the common type of devices used for lithographic exposure of integrated circuit patterns (defined by a mask) onto the semiconductor wafer.

In order to further increase the degree of integration of semiconductor devices, it is necessary to increase the resolution of the photolithographic process. One method for improving photolithographic resolution is to shorten the wavelength of the light used for exposure (i.e., use light sources such as high-power excimer lasers that produce ultraviolet rather than visible light). However, it has been found that irradiation of short-wavelength (e.g., ultraviolet) light on an optical member can adversely affect certain optical properties of the optical member. For example, repeated exposure to such light can cause structural deterioration of the optical member. Accordingly, as light having shorter wavelengths is increasingly used, techniques for accurately assessing optical and/or structural deterioration of optical members due to repeated exposure to short-wavelength light have become necessary.

The exact mechanism by which repeated exposure of optical members to high-intensity short-wavelength light causes optical and structural damage is unknown. It is theorized that a type of melting occurs due to heat absorption or generation by the optical members during repeated exposure to the irradiation. Such melting results in a change in the structure of the optical member and hence a change in certain optical properties of the member. Additionally, optical members exposed to short-wavelength light appear to suffer from brittle fracture (i.e., cracks) due to thermal stress and dielectric breakdown apparently arising from exposure to the strong electric-field component of the light. Such effects also lead to a deterioration of optical properties.

Structural breakdown of an optical member at a given wavelength and intensity of light is also affected by the purity and homogeneity of the material of which the optical member is made, the surface condition of the optical member (e.g., the smoothness of the surface), the presence of any abrasive residue (e.g., polishing-material residue) on the optical member surface, absorption by any film coating on the surface of the optical member, and the intensity distribution of the electric-field component of the light inside any film coating the optical member.

Apparatus are known for measuring laser damage and deterioration of optical members caused by repeated exposure to short-wavelength light. In conventional apparatus, a laser beam is irradiated onto multiple locations on a surface of an optical member while the intensity of the laser is changed. The occurrence of any breakdown in the exposed optical member is then examined by a human operator viewing the optical member using a microscope.

Assessment of deterioration or damage to the optical member in such a manner is subjective and prone to error. Consequently, deterioration measurements, even under similar conditions can have widely variable results. Additionally, due to cost, time constraints, and labor constraints involved in practicing conventional methods, only a small number of optical members typically can be examined.

Furthermore, using conventional methods, any deterioration of an optical member is assessed based upon observations of the surface of the optical member only. Many detrimental changes exhibited by an optical member exposed to high-intensity light occur within the thickness of the member, and such changes frequently arise before overt structural breakdown is evident. Thus, using conventional apparatus and methods for assessing the resistance of an optical member to deterioration due to repeated exposure to high-intensity short-wavelength light one cannot detect or measure internal, transitory damage to the optical member that precedes structural breakdown that causes progressive detrimental changes in the optical properties of the optical member.

### Summary of the Invention

In light of the foregoing deficiencies in conventional methods and apparatus, the present invention provides apparatus and methods for efficiently and accurately assessing the resistance of an optical member (including coatings on optical members) to deterioration caused by repeated exposure to a short-wavelength light, e.g., intense ultraviolet produced by an excimer laser. In particular, it has been discovered that photo-acoustic signals generated in the optical member in response to exposure to pulses of the short-wavelength light can be measured and analyzed to provide a measure of a change in light absorbance of an optical member with prolonged exposure to the short-wavelength light. Such changes in absorbance can indicate, long before structural damage is overtly evident, deterioration of any optical property or the optical member with exposure to the light.

The short-wavelength light of particular interest is ultraviolet light. However, it will be understood that the apparatus and methods of the invention can be applied to optical members exposed to any light that, when directed to the optical member in pulsatile form, can generate a photo-acoustic signal in the optical member. The light generally is of high intensity, such as produced by a laser (e.g., an excimer laser, which produces high-intensity ultraviolet light). Such high-intensity ultraviolet light is commonly used, for example, in projection microlithography, and the apparatus and methods of the invention have especial utility in evaluating optical members for use in optical systems of projection microlithography systems, including recent-generation microlithography systems that employ an excimer laser as an illumination light source.

According to one aspect of the invention, apparatus are provided for assessing the resistance of an optical member to deterioration caused by exposure of the optical member to a short-wavelength light. A preferred embodiment of such an apparatus comprises a light source for emitting a pulse of a short-wavelength light on an optical member so as to cause the optical member to produce a photo-acoustic signal. The apparatus also comprises a photo-acoustic sensor that is situated with respect to the optical member so as to detect and measure the photo-acoustic signal. The apparatus preferably also comprises a first lens system situated intermediate the light source and the optical member for shaping the light pulse irradiated on the optical member. The apparatus can further comprise a second lens system situated intermediate the first lens system and the optical member for adjusting the intensity of the light pulse irradiated on the optical member. A beamsplitter can be positioned intermediate the second lens system and the optical member for splitting the light pulse into a measuring beam directed to the optical member and a reference pulse. The reference pulse can be directed to a light sensor that receives and measures the intensity of the reference pulse. The light source, first lens system, second lens system, and the optical member are preferably situated on an optical axis.

The apparatus can further comprise a third lens system for focusing the measuring beam onto a selected location on the optical member.

The light source is preferably a laser, such as an excimer laser that produces a pulsatile beam of ultraviolet light at high intensity.

In a representative operation of an apparatus according to the invention, a series of laser pulses are emitted from the light source and directed to be incident upon the optical member to be tested. The pulses are preferably maintained at a constant intensity level. Photo-acoustic signals generated by the optical member in response to the incident pulses are detected and measured by the photo-acoustic sensor. The photo-acoustic signals have a parameter, such as amplitude, that is measured. A change in a photo-acoustic signal amplitude as a function of the cumulative amount of light incident on the optical member can be used to calculate a corresponding change in a light-absorbance statistic of the optical member. Such calculations are preferably performed by a processor, and the results of the calculations can be recorded in a memory for later recall and use in other calculations.

Another representative embodiment of an apparatus according to the present invention comprises a laser light source that emits a pulsatile beam of ultraviolet light. A first lens system directs the beam from the laser light source to an optical member. A beamsplitter located between the first lens system and the optical member splits the beam into a measurement beam and a reference beam. The measurement beam is directed to the optical member, and the reference beam is directed to light sensor. The light sensor measuring the intensity of the reference beam to provide a measurement of the intensity of the measurement beam. A photo-acoustic sensor detects and measures photo-acoustic signals generated in the optical member in response to the optical member being exposed to the measurement beam. The apparatus can include a second lens system between the first lens system and the beamsplitter to adjust the intensity of the light beam propagating from the first lens system to the beamsplitter. The photo-acoustic sensor and the light sensor are preferably connected to a processor that is operable to calculate, from intensity data received from the light sensor and photo- acoustic signal data received from the photo-acoustic sensor, a deterioration statistic of the optical member.

According to another aspect of the invention, methods are provided for assessing the resistance of an optical member to a change in an optical property (e.g., absorbance of light) caused by exposure of the optical member to a short-wavelength light. In a preferred embodiment of the method, the optical member is irradiated with a pulsatile beam of the short-wavelength light. Photo-acoustic signals generated in the optical member in response to exposure to the light are detected. A change in a parameter (e.g., amplitude) of the photo-acoustic signals is measured as a function of a cumulative amount of the light received by the optical member. From the change in the parameter of the photo-acoustic signals, a statistic is calculated that corresponds to a change in the optical property as a function of the cumulative amount of light received by the optical member. Preferably, the beam irradiated onto the optical member is maintained at a constant intensity, which is preferably measured. To facilitate, inter alia, measurement of light intensity, the light beam is preferably split into a measurement beam and a reference beam before the light beam reaches the optical member. The measurement beam is directed to the optical member and the reference beam is directed to a light sensor or analogous means serving to measure the intensity of the reference beam. The intensity measurement obtained of the reference beam serves as a measure of the intensity of the measurement beam.

According to another embodiment of methods according to the invention, a first series of pulses of short-wavelength light (e.g., ultraviolet light) at varying intensity levels is made incident on an optical member. The amplitudes of photo-acoustic signals generated in the optical member in response to exposure to the first series of pulses are measured. From data pertaining to the intensities and the initial amplitudes, an initial or baseline light-absorbance statistic of the optical member is obtained. The amplitudes of the photo-acoustic signals generated in the optical member are proportional to the intensity of the light to which the optical member is exposed and the quantity of light absorbed by the optical member.

A second series of pulses of the light is then directed, at a constant intensity level, to be incident on the optical member. The amplitude of photo-acoustic signals generated in the optical member in response to receiving the second series of pulses is measured. From data pertaining to the intensity of the second series of pulses and the corresponding measured photo-acoustic signal amplitudes obtained, and from the data pertaining to the initial intensities and amplitudes obtained, a second light-absorbance statistic (as a function of the cumulative amount of light in the second series of pulses) is determined. The second light-absorbance statistic is compared with the initial light-absorbance statistic to obtain a measure of the change in light absorbance of the optical member due to exposure to the short-wavelength light. Preferably, the intensity of the second series of pulses is greater than the intensity of the first series of pulses.

### Brief Description of the Drawings

FIG. 1(a) is a block diagram of a first representative embodiment of a measurement apparatus according to the present invention.

FIG. 1(b) is an enlarged view of the optical-member holder and photo-acoustic sensor of the FIG. 1(a) embodiment.

FIG. 2 shows representative output data from a photo-acoustic sensor utilized in the FIG. 1(a) embodiment.

FIG. 3(a) is a graph obtained in Example 1 of photo-acoustic sensor output-signal amplitude versus the number of laser-beam pulses (at 60 mJ/cm² intensity) to which an optical member was exposed.

FIG. 3(b) is a graph obtained in Example 1 of photo-acoustic sensor output-signal amplitude versus the number of laser-beam pulses (at 120 mJ/cm² intensity) to which an optical member was exposed.

FIG. 4 is a graph obtained in Example 1 of photo-acoustic sensor output-signal amplitude versus the number of laser-beam pulses (at 200 mJ/cm² intensity) to which an optical member was exposed.

FIG. 5 is a block diagram of a second representative embodiment of a measurement apparatus according to the present invention.

### Detailed Description of the Invention

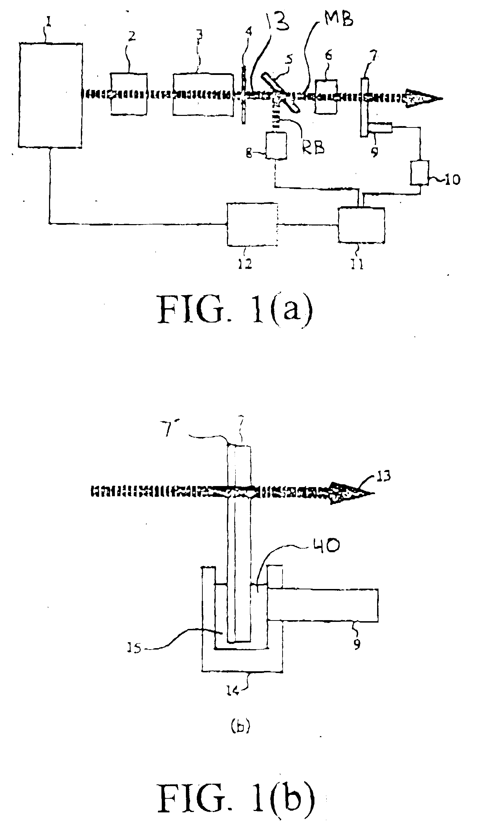

Referring to FIG. 1(a) a first representative embodiment of a measurement apparatus according to the present invention generally comprises, along an optical axis, a laser-light source 1 for emitting a laser beam 13, a first lens system 2 for shaping the laser beam, and a second lens system 3 for adjusting the intensity of the laser beam. An aperture 4 is preferably positioned downstream of the second lens system 3 to adjust the laser beam diameter to which an optical member will, ultimately, be exposed. A beamsplitter 5 is preferably positioned downstream of the second lens system 3 for splitting the laser beam 13 into a measurement beam MB and a reference beam RB. A third lens system 6 is positioned to receive and focus the measurement beam MB. A photo-acoustic sensor 9, for detecting photo-acoustic signals generated in an optical member 7 being tested, is positioned adjacent the optical member 7. A light sensor 8 is positioned to receive and measure the intensity of the reference beam RB. Thus, the light sensor 8 detects the quantity of laser light actually transmitted to the optical member 7.

An amplifier 10 is electrically connected to the photo-acoustic sensor 9 to amplify photo-acoustic signals detected by the photo-acoustic sensor. An oscilloscope 11 is electrically connected to both the amplifier 10 and the light sensor 8 to store photo-acoustic signal amplitude data received from the amplifier and/or the light sensor 8. A microprocessor 12 is electrically connected to the oscilloscope 11 to analyze photo-acoustic amplitude data received from the oscilloscope. The microprocessor 12 is also electrically connected to the laser-light source 1 for controlling the emission of irradiation therefrom.

The FIG. 1(a) apparatus, as well as apparatus and methods of the present invention in general, are useful for accurate and efficient assessment of the resistance of an optical member to deterioration caused by repeated exposure to high-intensity short-wavelength light. For convenience, the light source 1 is referred to as a short-wavelength laser or a laser. However, the apparatus and methods of the present invention are useful for assessing the resistance of optical members that are exposed to any of various short-wavelength light (i.e., light having a wavelength of less than about 400 nm). Excimer lasers are representative sources of such short-wavelength light that have high intensity. An excimer laser is a high-power pulse laser oscillating in the ultraviolet range, e.g., at a wavelength ranging from about 360 nm to about 150 nm.

Referring to FIG. 1(a), the first lens system 2 enlarges a dimension of the laser beam emitted from the laser-light source 1 (e.g., enlarging the dimensions of the laser beam from about 10 x 30 mm to about 30 x 30 mm). To such end, the first lens system preferably comprises two cylindrical lenses. The second lens system 3 adjusts the irradiation intensity of the laser beam transmitted by changing the transverse dimensions of the laser beam (e.g., changing the transverse dimensions of the laser beam from about 60 x 60 mm to about 15 x 15 mm). To such end, the second lens system preferably comprises a zoom-lens to provide a variable magnification ("zoom") function. The beamsplitter 5 splits the laser beam 13 into a reference beam RB and a measuring beam MB.

The third lens system 6 focuses and projects the measuring beam MB onto an optical member 7 for testing. To such end, the third lens system 6 preferably comprises a four-lens system. The optical member 7 includes, without limitation, lenses, prisms, filters, windows, reflectors, and any other optical component utilized in a projection-photolithography apparatus or other apparatus utilizing short-wavelength light.

The optical member 7 can be coated or not coated, modified or not modified. (Fig. 1(b) illustrates a coated optical member, wherein 7' is a thin-film coating on the optical member 7). The optical member 7 is mounted on a sample holder 14. The optical member 7 is repeatedly irradiated with laser pulses while maintaining the intensity of the laser beam 13 at a preselected magnitude. A photo-acoustic signal is generated in the optical member 7 in response to each pulse of laser light absorbed by the optical member.

The photo-acoustic signals are detected by the photo-acoustic sensor 9. The photo-acoustic sensor 9 preferably comprises a piezoelectric device, but may alternatively comprise any suitable photo-acoustic sensor known to those skilled in the art. The photo-acoustic sensor 9 is preferably mounted to the sample holder 14 using an adhesive or other suitable means.

Referring to FIG. 1(b), the optical member 7 is preferably mounted in the sample holder 14 with a gap 40 between the optical member and the sample holder. The sample holder 14 preferably comprises a metal, a plastic material (e.g., BAKELITE^{®}, available from Union Carbide Corporation) or any other suitable material. The gap 40 is preferably filled with a phase-matching material 15 capable of matching the phase of the photo-acoustic signals generated in the optical member 7. In other words, the phase-matching material 15 propagates the photo-acoustic signal generated in the optical member 7 to the photo-acoustic sensor 9, minimizing loss in signal amplitude prior to detection by the photo-acoustic sensor. The phase-matching material 15 may comprise, for example, water or oil. Accordingly, the optical member 7 is preferably secured in the sample holder 14 via the phase-matching material 15. Photo-acoustic signals generated in the optical member 7 are propagated through the phase-matching material 15 for detection by the photo-acoustic sensor 9.

During operation of the FIG. 1(a) embodiment, laser pulses are emitted from the light source 1. The laser pulses are shaped by the first lens system 2 and transmitted to the second lens system 3. The irradiation intensity of each laser pulse is adjusted by adjusting the zoom lens of the second lens system 3. The laser pulse is split by the beamsplitter 5 into a reference beam RB and a measuring beam MB.The measuring beam MB is transmitted to the optical member 7. The reference beam RB is transmitted to the light sensor 8 which detects and determines the intensity of the laser pulse transmitted to the optical member 7.

Accordingly, the optical member 7 is irradiated with a series of laser pulses each having an intensity that is regulated by the second lens system 3. In response to irradiation by the laser pulses, photo-acoustic signals are generated in the optical member 7. The photo-acoustic sensor 9 detects the photo-acoustic signals. Any change in the magnitude of the photo-acoustic signals is measured relative to the number of laser pulses of a given intensity irradiating the optical member 7.

Typically, a photo-acoustic signal having a duration of about 15 microseconds is generated after each laser pulse to the optical member 7. Because the first and last portions of each photo-acoustic signal typically contain a relatively high-noise component, preferably only a middle portion (i.e., of about 10 microseconds duration) of the photo-acoustic signal is measured so as to reduce the level of undesirable noise from the photo-acoustic signal and provide greater measurement accuracy of signal amplitude.

Typically, the dominant frequency of the photo-acoustic signal is about 150 kHz. Photo-acoustic signals having a wavelength corresponding to this frequency can be measured using a fast-Fourier transform ("FFT") method. Alternatively, other measurement methods known to these skilled in the art may be used. The detected and measured photo-acoustic signals are preferably filtered by an appropriate filter to further reduce noise. The filter means may be any suitable filter means known to those skilled in the art that will filter out photo-acoustic signals other than those signals having frequencies equal to about 150 kHz. That is, a preferred filter means filters out photo-acoustic signals having frequencies that are either below or above about 150 kHz.

An alternative embodiment can be used to assess the resistance to deterioration of an optical member exposed to laser light. Specifically, a change in light absorbance exhibited by the optical member 7 is measured over time as the optical member is exposed to laser pulses. An initial light-absorbance measurement of the optical member is obtained before actually beginning the exposure-resistance test. A particular magnitude of light absorbance by the optical member is based upon a relationship of the intensity of the incident laser pulse to the magnitude of a photo-acoustic signal generated in the optical member in response to the laser pulse. Following a determination of an initial absorbance, multiple laser pulses are irradiated on the optical member while the intensity of the laser pulses is maintained constant. The photo-acoustic signals generated in the optical member are detected and the photo-acoustic signal amplitude is measured. Any change in the photo-acoustic signal amplitude with repeated irradiation of laser pulses on the optical member is determined. If a change in photo-acoustic signal amplitude is detected (relative to the initial level), then a corresponding change in light absorbance by the optical member is calculated based upon the measured change. The resistance of the optical member to optical deterioration upon repeated exposure to the laser pulses is assessed based upon the change in the light absorbance by the optical member. I.e., a change in light absorbance indicates a change in the internal structure of the optical member and a corresponding change in the optical properties of the optical member.

The photo-acoustic signals generated in the optical member can be measured with exposure of the optical member to laser beams or pulses having any of various intensities.

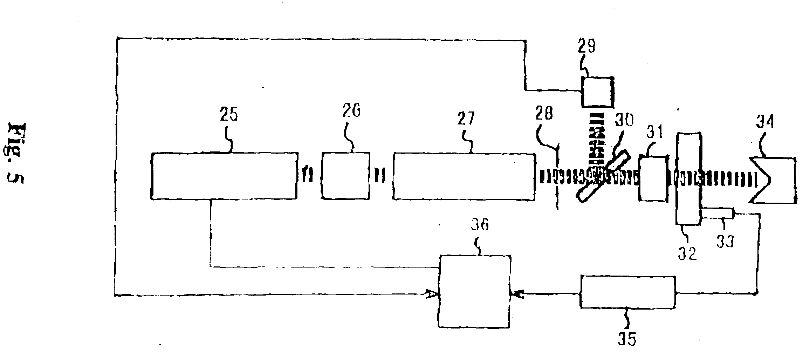

Referring to FIG. 5, a second embodiment of a deterioration-measurement apparatus according to the present invention generally comprises, along an optical axis, a laser-light source 25 that emits a laser beam (which can be pulsatile), a first lens system 26 for shaping the laser beam, and a second lens system 27 for adjusting the intensity of the laser beam. An aperture 28 is positioned downstream of the second lens system to adjust the dimensions of the laser beam. A beamsplitter 30 is preferably positioned downstream of the second lens system 27 for splitting the laser beam into a measurement beam MB and a reference beam RB. A third lens system 31 is positioned to receive and focus the measurement beam MB. The first, second, and third lens systems 26, 27, and 31 perform substantially the same functions as the first, second, and third lens systems in the Fig. 1(a) embodiment. A photo-acoustic sensor 33 for detecting photo-acoustic signals generated in an optical member 32 being tested is positioned adjacent the optical member 32. A light sensor 29 is positioned to receive and measure the intensity of the reference beam RB. Thus, the light sensor 29 detects the irradiation intensity of laser light actually transmitted to the optical member 32.

An amplifier 35 is electrically connected to the photo-acoustic sensor 33 to amplify photo-acoustic signals detected by the sensor. A microprocessor 36 is electrically connected to the amplifier 35 and the light sensor 9 to store and analyze data indicative of the amplitudes of the photo-acoustic signals received from the amplifier 35. The microprocessor 36 is capable of controlling the amplifier 35. The microprocessor 36 is also preferably electrically connected to the laser-light source 25 to control the emission of irradiation therefrom. The measurement beam MB that passes through the optical member 32 is absorbed by a beam stop 34.

The invention will be better understood by reference to the following Examples, which are intended to merely illustrate the best mode now known for practicing the invention, and are not intended to be limiting in any way.

### EXAMPLE 1

This example is directed to testing an optical member using the embodiment of FIG. 5. A laser-light source 25 comprising an excimer laser of relatively low intensity was used to avoid damaging the optical member 32. The excimer laser emitted a wavelength of 248 nm, a pulse width of 40 nsec, and an intensity of less than 10 mJ/cm²/ pulse, wherein the pulse length is substantially equal to the pulse width.

The optical member having a diameter of 30 mm and a thickness of 3 mm was made of a synthetic quartz glass. One surface was coated with an anti-reflection film comprising HfO₂·Al₂O₃·MgF₂.

Prior to irradiating the optical member 32 with a series of laser pulses, a reference photo-acoustic signal profile was obtained. To such end, the second lens system 27 was adjusted in a stepwise manner to progressively increase the intensity of the light. The magnitude of the corresponding photo-acoustic signals exhibited a linear relationship with the intensity of the laser pulses. The slope of the linear function represented an initial (or reference) light absorbance of the optical member. During subsequent testing directed to measuring resistance of the optical member to deterioration, any change in light absorbance of the optical member was calculated based upon this initial light-absorbance.

The second lens system 26 was adjusted to produce laser pulses having an intensity of less than 10 mJ/cm². The optical member was irradiated by a series of initial laser pulses while changing the intensity of the pulses in a stepwise manner within the stated range. The signals generated by the photo-acoustic sensor were recorded and plotted versus light intensity. A slope of the resulting plot was determined to ascertain the initial light absorbance exhibited by the optical member. In this example the initial light absorbance was determined to be about 0.18%.

Changes in light absorbance of the optical member were then determined as a function of exposure to the laser light. Specifically, the optical member was irradiated by a series of laser pulses maintained at a constant intensity level. Changes in light absorbance of the optical member were measured using the above-described photo-acoustic technique.

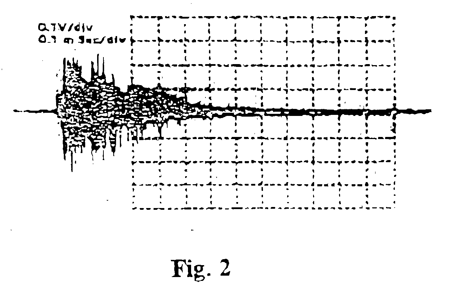

More specifically, an optical member 32 was placed in the sample holder (FIG. 1(b)). The intensity of the irradiating laser light was increased to about 60 mJ/cm² by adjusting the second lens system 3. As each laser pulse was irradiated on the optical member 32, the resulting photo-acoustic signal generated in the optical member was detected by the photo-acoustic sensor 33. A representative output of the photo-acoustic sensor 33, i.e., a representative photo-acoustic signal, is shown in FIG. 2. The maximum amplitude of the photo-acoustic signal, or the FFT of the signal, was stored in the oscilloscope 11 and/or the microprocessor 12 as an initial photo-acoustic signal value. The optical member was then exposed to repeated laser pulses. The output signals of the photo-acoustic sensor 33 were measured at preselected intervals (i.e., following a particular number of laser pulses) until at least about 10⁷ laser pulses had been irradiated on the optical member.

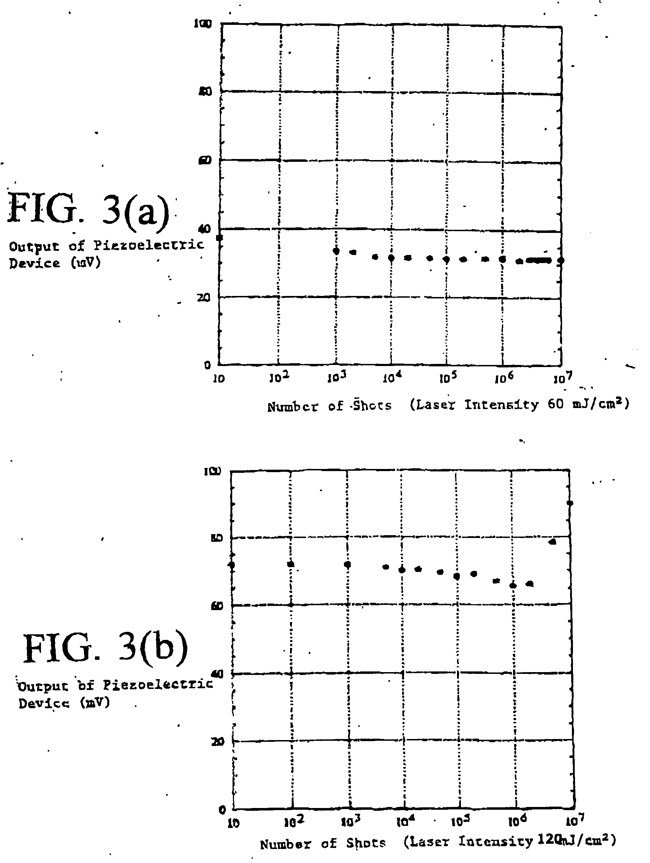

FIG. 3(a) shows a representative plot of the output signals of the photo-acoustic sensor 33 as a function of the number of laser pulses (of intensity 60 mJ/cm²) to which the optical member was exposed. The output signal amplitude is proportional to the amount of light absorbed by the optical member. In FIG. 3(a), the output amplitude slightly decreases until about 10⁴ laser pulses had been absorbed. This result is apparently due to a "cleaning" action of the laser light on the surface of the optical member 32, which slightly affects the light absorbency of the sample. Almost no change occurs in the output amplitude when the number of laser pulses exceeds about 10⁴. Thus, the internal structure of the optical member 32 apparently does not change even when the optical member is continuously irradiated by laser pulses at an intensity of about 60 mJ/cm².

To continue the test, the intensity of the laser output was increased to 120 mJ/cm² using the second lens system 27. Measurement results are shown in FIG. 3(b). The plot depicted in FIG. 3(b) shows that the output amplitude of the signal from the photo-acoustic sensor abruptly rose from 65 mV at 5x10⁶ laser pulses to 90 mV at 10⁷ laser pulses. As discussed above, the amplitude of the signal produced by the photo-acoustic sensor 33 is proportional to the amount of light absorbed by the optical member. The 65 mV amplitude corresponds to a light absorbance of 0.18%, and the 90 mV amplitude corresponds to a light absorbance of 0.25%. These results indicate that some deterioration of the optical member occurred with repeated exposure to higher intensity laser pulses.

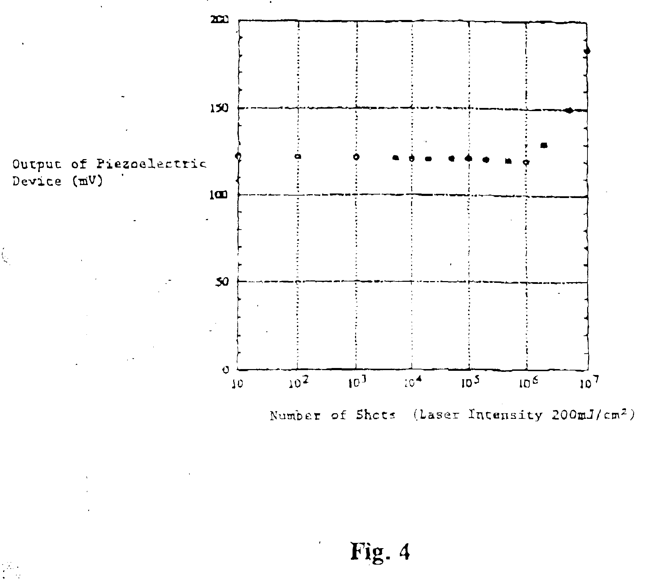

The intensity of the laser output was then increased to 200 mJ/cm² using the second lens system 27. Measurement results are shown in FIG. 4. The plot of FIG. 4 indicates that the amplitude of the photo-acoustic sensor output signal changes from 120 mV at about 2x10⁶ laser pulses to about 185 mV at 10⁷ laser pulses. The light absorbance corresponding to 185 mV amplitude is about 0.27%. These results indicate significant deterioration of the optical member.

This example can be performed in a similar manner to produce similar results using another excimer laser, such as an excimer laser producing a wavelength of 193 nm, or other type of laser.

### EXAMPLE 2 - COMPARISON EXAMPLE

As a comparison example, a conventional laser-damage measurement apparatus (employing a microscope) was used to perform a measurement on an optical member. The laser-intensity settings were 60 mJ/cm², 120 mJ/cm², and 200 mJ/cm², as in Example 1. At each stated light intensity, an optical member as described in Example 1 was exposed to up to about 5x10⁷ laser pulses. Any fracture or other overt deterioration of the optical member was observed using a microscope.

At a laser intensity of 60 mJ/cm², no deterioration was observed after the optical member had been exposed to 5x10⁷ laser pulses. At a laser intensity of 120 mJ/cm², fracture of the optical member occurred after exposure to 5x10⁷ laser pulses. No evidence of deterioration was evident until actual fracture. At a laser intensity of 200 mJ/cm², fracture of the optical member occurred after exposure to 2x10² pulses. No deterioration was evident until actual fracture.

Thus, using the conventional apparatus and method, initial transitory changes or internal deterioration ultimately resulting in fracture of the optical member were not detectable. That is, actual fracture of the optical member must first occur in order for deterioration to be manifest using conventional apparatus and methods.

In contrast, using the deterioration-measurement apparatus of the present invention, internal transitory deterioration of an optical member is detectable as changes in the amplitude of photo-acoustic signals from the optical member with increasing exposure to laser light. Thus, internal deterioration can be observed before deterioration can progress sufficiently to cause fracture of the optical member.

Thus, by measuring a change in the amplitude of photo-acoustic signals (which are proportional to a change in light absorption), transitory deterioration of the optical properties of an optical member is detectable before deterioration progresses to overt fracture or other gross damage. The intensity and the number of laser pulses at which light absorbance or photo-acoustic signals begin to change can be used as threshold values against which to compare data concerning the resistance of an optical member to deterioration due to repeated exposure to short-wavelength light. Thus, the resistance of an optical member to deterioration due to repeated exposure to laser light is reliably assessed at high sensitivity.

Having illustrated and described the principles of the invention with preferred embodiments and examples, it should be apparent to those skilled in the art that the invention can be modified in arrangement and detail without departing from such principles. We claim all the modifications coming within the spirit and scope of the following claims.

The features disclosed in the foregoing description, in the claims and/or in the accompanying drawings may, both separately and in any combination thereof, be material for realising the invention in diverse forms thereof.

## Claims

1. An apparatus for assessing the resistance of an optical member to deterioration caused by exposure of the optical member to a short-wavelength light, the apparatus comprising:
(a) a light source for emitting a pulse of a short-wavelength light on an optical member so as to cause the optical member to produce a photo-acoustic signal; and
(b) a photo-acoustic sensor situated with respect to the optical member so as to detect and measure the photo-acoustic signal.

2. The apparatus of claim 1, further comprising a first lens system positioned intermediate the light source and the optical member for shaping the light pulse irradiated on the optical member.

3. The apparatus of claim 2, further comprising a second lens system positioned intermediate the light source and the optical member for adjusting an intensity of the light pulse irradiated on the optical member.

4. The apparatus of claim 3, wherein the second lens system comprises a zoom lens.

5. The apparatus of claim 3, further comprising a beamsplitter positioned intermediate the light source and the optical member for splitting the light pulse into a measuring beam directed toward the optical member and a reference beam.

6. The apparatus of claim 5, further comprising a light sensor positioned to receive the reference beam and to measure the intensity of the reference beam.

7. The apparatus of claim 5, further comprising a third lens system positioned intermediate the beamsplitter and the optical member for focusing the measuring beam onto a selected location of the optical member.

8. The apparatus of claim 1, wherein the photo-acoustic sensor comprises a piezoelectric device.

9. The apparatus of claim 1, further comprising a sample holder comprising a phase-matching material for securing the optical member in the sample holder as the optical member is irradiated with the light pulse, the phase-matching material being transmissive to the photo-acoustic signal generated in the optical member.

10. The apparatus of claim 9, wherein the photo-acoustic sensor is positioned relative to the optical member such that the photo-acoustic signal is transmitted through the phase-matching material from the optical member to the photo-acoustic sensor.

11. The apparatus of claim 1, wherein the light source comprises a laser.

12. The apparatus of claim 11, wherein the laser is an excimer laser.

13. An apparatus for assessing the resistance of an optical member to deterioration caused by exposure of the optical member to light, the apparatus comprising:
(a) a first lens system situated so as to receive pulses of the light and direct the pulses to an optical member, the pulses having a characteristic sufficient to generate a photo-acoustic signal in the optical member; and
(b) a photo-acoustic sensor situated with respect to the optical member so as to detect the photo-acoustic signal.

14. The apparatus of claim 13, further comprising a light source that emits pulses of the light, the light source being situated so as to direct the pulses to the first lens system.

15. The apparatus of claim 13, further comprising a light sensor situated so as to receive at least a portion of each light pulse so as to measure the intensity of the light pulses.

16. The apparatus of claim 15, further comprising a beamsplitter situated so as to direct a measurement portion of the light pulses from the first lens system to the optical member and a reference portion of the light pulses from the first lens system to the light sensor.

17. The apparatus of claim 13, further comprising a second lens system situated so as to direct the light pulses from the first lens system to the optical member, the second lens system being operable to adjust the intensity of the light pulses directed to the optical member.

18. The apparatus of claim 13, further comprising a beamsplitter situated so as to direct a measurement portion of the light pulses from the second lens system to the optical member and a reference portion of the light pulses from the second lens system to the light sensor.

19. The apparatus of claim 18, further comprising a processor connected to the light sensor and to the photo-acoustic sensor, the processor being operable to determine an photo-acoustic signal amplitude of the photo-acoustic signals detected by the photo-acoustic sensor and to calculate a light-absorbance statistic, relative to the intensity of light sensed by the light sensor, for the optical member.

20. An apparatus for assessing the resistance of an optical member to deterioration caused by irradiation of the optical member with short-wavelength light, the apparatus comprising along an optical axis:
(a) a laser light source that emits a pulsatile beam of ultraviolet light;
(b) a first lens system for directing the beam from the laser light source to an optical member;
(c) a beamsplitter positioned intermediate the first lens system and the optical member for splitting the beam from the light source into a measuring beam directed toward the optical member and a reference beam;
(d) a light sensor positioned to receive the reference beam, the light sensor measuring the intensity of the reference beam to provide a measurement of the intensity of the measuring beam; and
(e) a photo-acoustic sensor positioned relative to the optical member for detecting and measuring photo-acoustic signals generated in the optical member in response to the optical member being exposed to the measuring beam.

21. The apparatus of claim 20, wherein the laser light source comprises an excimer laser.

22. The apparatus of claim 20, further comprising a second lens system positioned between the first lens system and the beamsplitter, the second lens system being operable to adjust the intensity of the light beam propagating from the first lens system to the beamsplitter.

23. The apparatus of claim 20, further comprising a processor connected to the light sensor and the photo-acoustic sensor, the processor being operable to calculate, from intensity data received from the light sensor and photo-acoustic signal data received from the photo-acoustic sensor, a deterioration statistic of the optical member.

24. A method for assessing the resistance of an optical member to a change in an optical property caused by exposure of the optical member to a short-wavelength light, the method comprising the steps:
(a) irradiating the optical member a pulsatile beam of the short-wavelength light;
(b) detecting photo-acoustic signals generated in the optical member in response to the optical member receiving corresponding pulses of the light;
(c) measuring a change in amplitude of the photo-acoustic signals as a function of a cumulative amount of the short-wavelength light received by the optical member irradiated by the pulses of short-wavelength light; and
(d) calculating, from the change in amplitude of the photo-acoustic signals, a statistic corresponding to a change in the optical property of the optical member as a function of the cumulative amount of short-wavelength light received by the optical member.

25. The method of claim 24, wherein step (a) comprises maintaining a constant intensity of the beam irradiated onto the optical member.

26. The method of claim 24, further comprising the step of measuring the intensity of the beam of light irradiated on the optical member.

27. The method of claim 24, further including the steps of:
splitting the light beam into a measuring beam and a reference beam before the light beam reaches the optical member;
directing the measurement beam to be incident upon the optical member; and
measuring the intensity of the reference beam so as to obtain a measurement of the measuring beam.

28. A method for assessing the resistance of an optical member to deterioration caused by exposure of the optical member to intense ultraviolet light, the method comprising the steps:
(a) directing a first series of pulses of the ultraviolet light the pulses having different intensities to be incident upon an optical member;
(b) measuring initial amplitude parameters of photo-acoustic signals generated in the optical member in response to the optical member being exposed to the first series of pulses;
(c) from data pertaining to the intensities and the amplitude parameters, determining a baseline light-absorbance statistic of the optical member to the ultraviolet light;
(d) directing a second series of pulses of the ultraviolet light, at an intensity, to be incident on the optical member;
(e) measuring an amplitude parameter of photo-acoustic signals generated in the optical member in response to the optical member being exposed to the second series of pulses;
(f) from data pertaining to the intensity of the second series of pulses and the amplitude parameter obtained in step (e), determining a second light-absorbance statistic of the optical member to the ultraviolet light as a function of a cumulative amount of the ultraviolet light in the second pulses to which the optical member was exposed; and
(g) comparing the second light-absorbance statistic with the baseline light-absorbance statistic to obtain a measure of a change in light absorbance of the optical member.

29. The method of claim 28, wherein the intensity of the second series of pulses is constant.
